Europäisches Patentamt

European Patent Office

Office européen des brevets

(11) Publication number: 0 158 304 A1

# (12) EUROPEAN PATENT APPLICATION

(21) Application number: 85104185.5

(22) Date of filing: 05.04.85

(51) Int. Cl.⁴: F 16 B 19/10

(30) Priority: 13.04.84 US 600263

(43) Date of publication of application:
16.10.85 Bulletin 85/42

(84) Designated Contracting States:
DE FR GB

(71) Applicant: The B.F. GOODRICH Company
Dept. 0015 WHB-6 500 South Main Street
Akron, Ohio 44318(US)

(72) Inventor: Shackelford, James Russell
225 Lincoln Avenue
Cuyahoga Falls Ohio 44221(US)

(74) Representative: von Kreisler, Alek, Dipl.-Chem. et al,
Deichmannhaus am Hauptbahnhof
D-5000 Köln 1(DE)

(54) Fastener.

(57) A fastener of the blind rivet variety having an exterior and an interior end, an exterior surface and an interior surface, threads formed adjacent the interior end and a shoulder adjacent the exterior end with a counter bore portion therebetween. The shoulder is of a diameter enlarged with respect to the body portion and is provided with projections (50) on its interior surface to contact sheer material into which it is to be inserted. The projections are located so that upon insertion in the sheet material the projections will penetrate the sheet material remote from the aperture in which the fastener is positioned.

FIG. 4

EP 0 158 304 A1

# FASTENER

## BACKGROUND OF THE INVENTION

Problems are often encountered in the utilization of fasteners of the blind rivet variety in applications where the environment subjects the fasteners to rotational forces. Such rotational forces may occur when a threaded supplemental cylindrical member is screwed into threaded engagement with the threads of the blind fastener or when the blind fastener is subsequently subjected to vibrational forces tending to rotate the fastener from its intended position.

One prior art approach to solving this problem may be found in certain commercially available keyed fasteners wherein a single protuberance or keyway on the shoulder of the fastener extends radially along the inner surface of the shoulder of the fastener the entire length of the shoulder to penetrate the surface of the apertured material in an effort to prevent rotation. This approach provides an uneven distribution of forces tending to preclude rotation of the fastener. Further, the keyway extends to the edge of the hole tending to degrade and weaken the material in certain applications.

Another prior art approach is disclosed in Australian patent 241038 to Parker. In the Parker device, a circular ridge is provided on the inner beveled shoulder of a blind rivet. Such an approach reduces the possibility of fastener movement transverse to the axis but does not positively preclude rotation of the fastener within the hole except to the extent that it provides an additional frictional bearing surface.

While the prior art approaches as described above have been adequate to varying degrees for their intended purpose, the advent of composite materials such as Kevlar, Tedlar, Fiberglass, graphite composite materials and the like has required a new approach to the problem of rotation prevention.

More specifically, composite materials as described above, when drilled or otherwise apertured for the reception of, and fitted with, an internally threaded blind fastener, may subject the composite material adjacent the fastener-receiving hole to abrasion, scratching, chipping or the like at the edge of the hole and, thereby, deface and weaken the composite material, sometimes to an unacceptable degree. Such frequently occurs when prior art anti-rotational mechanisms are utilized in association with apertured composite materials. This is because the anti-rotational portions of the blind rivet shoulder will pierce the composite material up to and including the edge of the composite material at the location where the fastener-receiving hole is formed. Such arrangement has been found to be unacceptably damaging to the composite material resulting in weakened strength and unacceptability of the assembly for its intended purpose in many applications where blind fasteners and composite materials are coupled. Problems of this type are not normally encountered in applications where blind rivets are utilized in holes other than composite materials.

## SUMMARY OF THE INVENTION

0158304

The present invention is directed to an improved fastener of the blind rivet type having a main body portion insertable into an aperture or hole in the material to which it is to be coupled. The exterior end of the fastener is formed with a shoulder to preclude movement of the entire blind fastener axially through the aperture. At the interior end of the fastener there is provided an internally threaded section. Between the threads and the shoulder is a counter bored portion adapted to be appropriately bulged or upset during installation to securely hold the blind rivet in place. Located on the interior face of the shoulder opposite the exterior face, are a series of keyways, protuberances or projections, preferably six, extending downwardly to contact and penetrate the exterior surface of the material adjacent the hole in which the fastener is to be inserted and secured. Such contact and penetration occurs during installation of the fastener. The projections or keyways are located spaced from the interior edge of the shoulder to preclude the deformation of the sheet material immediately adjacent the hole whereby degradation of the sheet material at that location would otherwise occur. A plurality of such keyways increases positively anti-rotational forces and evenly distributes such forces in the material around the hole.

Because of the design and construction of the projections, rotational movement of the rivet within the hole can be precluded during the threaded insertion of a supplemental member into the rivet and at times during use when the rivet is subjected to vibrational forces which might otherwise undesirably rotate the fastener from its appropriate orientation.

In order to gain a better understanding of the invention as well as other advantages and further features thereof, reference is made to the following detailed description of the invention to be read in conjunction with the accompanying drawings and claims which form part of this application.

## BRIEF DESCRIPTION OF THE DRAWINGS

Figure 1 is an enlarged illustration of the fastener positioned in an aperture within the sheet material in which the fastener is to be inserted with the sheet material shown in cross section and parts of the fastener broken away to show internal constructions thereof.

Figure 2 is an enlarged sectional illustration of the fastener assembly shown in Figure 1 prior to insertion into the aperture of the sheet material aperture.

Figure 3 is a sectional view of the fastener of Figures 1 and 2 taken along line 3-3 of Figure 2 and showing the projections or keyways head on.

Figure 4 is a sectional view of the fastener assembly and sheet material, similar to Figure 1, but showing the upsetting tool in operative position with respect thereto immediately after the upsetting operation.

## DESCRIPTION OF THE PREFERRED EMBODIMENT

As shown in the figures, the fastener 10 is of the blind rivet variety and is constructed of an essentially tubular shape. The fastener includes an exterior end 12 and an interior end 14. The fastener also includes an exterior surface 16 and an interior surface 18. The exterior end of the fastener includes a flange or shoulder portion 20 positionable with its interior face or surface 22 on the exterior face or surface 24 of the sheet material 26 to which it is to be secured. The shoulder precludes improper movement of the fastener entirely through the hole in the material to which it is to be secured. The remainder of the fastener includes an interiorly threaded portion 30 adjacent the interior end.

Located between the shoulder and threads is the internally counter bored portion 32. The entire fastener, except for the flange or shoulder 20, is adapted to be received within the aperture 34 of the sheet material. The counter bored portion is also employed to deform and contact the interior surface 36 of the sheet material adjacent the aperture for securely holding the fastener in place with respect to the sheet material during operation.

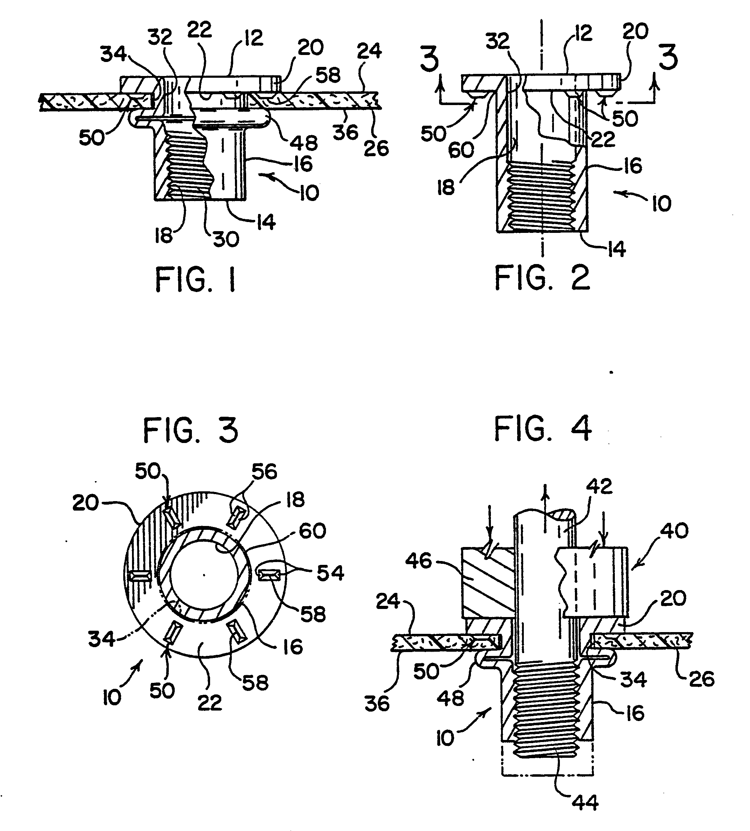

Shown in Figure 4 is the upsetting tool 40 composed of a central cylindrical reciprocal member 42 having a threaded end 44 and also including an apertured abutment member 46 through which the reciprocal member may slide. This tool is used to create the bulged or upset portion 48 of the rivet in position.

In order to install the blind rivet fastener of the present invention, the fastener is inserted into the aperture of the walled member with its shoulder in contact with the exterior surface of the walled member. An upsetting tool 40, having a central reciprocal member 42 with external threads 44, is screwed a predetermined distance into the threads of the fastener. An abutment member 46 surrounding the reciprocal member is then placed in pressure engagement with the exterior surface of the shoulder of the fastener and pressure is applied to the shoulder members through the abutment surfaces. A force of predetermined magnitude and distance is applied through the pulling out of the reciprocal member, concurrently with the pushing in of the abutment surface, to form the bulge in the central portion of the fastener member. The direction of these forces is shown by the arrows in Figure 4. Thereafter, the reciprocal member is unscrewed from the blind fastener and the fastener is ready for the threaded reception of the threaded member, which, in this embodiment is an automobile button.

During this upsetting operation, the keyways or projections 50 of the fastener are forced by the pressure of the bulging or upsetting operation to create rotation preventing indentations into the exterior surface of the material which is receiving the fastener. The ultimate purpose of the projections is to preclude the inadvertent rotation of the fastener assembly with respect to the sheet material. Such inadvertent rotation might otherwise occur when external rotational forces are applied as through the rotational threading attachment of a threaded member into the positioned fastener. Such additional rotational forces might also otherwise occur when the fastener and material are subjected to external vibrational forces.

As can be seen particularly in Figures 1 and 4, the projections are spaced from the aperture in the sheet material by virtue of their location on the shoulder spaced from the inner edge thereof.

In the preferred embodiment, six such projections or keyways 50 are located on the inner face of the shoulder, equally spaced sixty degrees from each other. The projections are each provided with four tapered edges extending away from the surface of the shoulder at essentially equal angles. Of these surfaces two are generally in the form of triangles and are the smaller or circumferentially extending surfaces 54. The other two surfaces are the larger or radial surfaces 56 and take the form generally as trapezoids. The surfaces thus form a knife-like line 58 at their region of contact.

The trapezoidal surfaces extending in the radial direction are preferably elongated with respect to the triangular surfaces extending in the circumferential direction so as to effectively create a knife-like surface on the external edge of each of the projections to facilitate penetration into the sheet material. The line 58, is formed by the meeting of the two radial, trapezoidal surfaces and the two circumferential, triangular surfaces. This line enhances the rotation-precluding characteristics of the fastener.

in the radial direction extends the rotation precluding characteristic. It is essential that the surface of each projection closest to the aperture of the fastener be spaced sufficiently remote from the jointure 60 between the shoulder and the adjacent surface of the fastener and hence spaced from the aperture of the sheet material to preclude deformation of the sheet material at its aperture. Without such spacing and orientation the composite sheet material might adversely chip, scar, or otherwise improperly reduce the strength of the sheet material at the aperture.

The fastener or blind rivet of the present invention may be formed of aluminum, steel, brass, stainless steel or other similar material. In the preferred embodiment the fastener is fabricated of high carbon steel.

During fabrication of the fastener, the shoulder is normally formed by a cold heading process. The projections are preferably formed during that operation by a suitably shaped header die.

While the instant invention is described above with regard to a preferred embodiment, it is intended to be covered broadly within the spirit and scope of the appended claims.

## CLAIMS

0158304

What is claimed is:

1. A blind rivet type fastener including a tubular member having an exterior end and an interior end and also having an exterior surface and an interior surface, a shoulder on the exterior surface at the external end and threads in the interior surface at the internal end and with an internal counter bore therebetween, the shoulder having an outer diameter greater than the outer diameter of the remainder of the fastener, said shoulder portion being provided with a plurality of projections on its internal surface positionable to contact and penetrate sheet material to which it is to be coupled, said projections being spaced remote from the region where the shoulder joins the exterior surface of the remainder of the fastener.

2. The fastener as set forth in claim 1 wherein at least two of the surfaces of said projections are generally of a trapezoidal shape.

3. The fastener as set forth in claim 2 wherein at least two of the surfaces of said projections are generally of a triangular shape.

4. The fastener as set forth in claim 3 wherein the surfaces of said projections meet to form lines in a direction radially with respect to the fastener.

5. A blind rivet type fastener including a tubular member having an exterior end and an interior end and also having an exterior surface and an interior surface, a shoulder on the exterior surface at the external end and threads in the interior surface at the internal end and with an internal counter bore therebetween, the shoulder having an outer diameter greater than the outer diameter of the remainder of the fastener, said shoulder portion being provided with a plurality of projections on its internal surface positionable to contact and penetrate sheet material to which it is to be coupled, said projections being formed with knife-like edges equally spaced around the periphery of the shoulder with each said projection being spaced remote from the region where the shoulder joins the exterior surface of the remainder of the fastener.

**FIG. 1**

**FIG. 2**

**FIG. 3**

**FIG. 4**

European Patent
Office

**EUROPEAN SEARCH REPORT**

**0158304**

Application number

EP 85 10 4185

## DOCUMENTS CONSIDERED TO BE RELEVANT

| Category | Citation of document with indication. where appropriate, of relevant passages | Relevant to claim | CLASSIFICATION OF THE APPLICATION (Int Cl.4) |
|---|---|---|---|
| X | GB-A-1 010 802 (ENGLISH ELECTRIC CO.) * Page 2, lines 26-29 * | 1,5 | F 16 B 19/10 |
| A | | 4 | |
| X | GB-A-1 487 174 (SHEADER) * Page 1, lines 83-84 * | 1,5 | |
| A | | 3,4 | |
| X | GB-A-1 501 509 (TAPPEX THREAD INSERTS) * Page 2, lines 36/37 * | 1,2,5 | |
| A | | 4 | **TECHNICAL FIELDS SEARCHED (Int. Cl.4)** |
| X | US-A-2 296 470 (KEEHN) * Page 1, right-hand column, lines 6-8 * | 1,5 | F 16 B 19/10 |
| A | | 4 | |
| X | US-A-2 763 314 (GILL) * Column 3, lines 37/38 * | 1,5 | |
| A | | 4 | |

--- -/-

The present search report has been drawn up for all claims

| Place of search | Date of completion of the search | Examiner |
|---|---|---|
| BERLIN | 14-06-1985 | ZAPP E |

# 0158304

European Patent
Office

**EUROPEAN SEARCH REPORT**

Application number

EP 85 10 4185

Page 2

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 030 705 (GILL)<br>* Column 3, lines 22/23 * | 1,5 | |
| A | | 4 | |
| | --- | | |
| X | US-A-3 128 813 (DAVIS et al.)<br>* Column 3, line 15 * | 1,5 | |
| A | | 4 | |
| | --- | | |
| X | US-A-3 267 793 (DEVINE et al.)<br>* Figure 15 * | 1,5 | |
| A | | 4 | |
| | --- | | TECHNICAL FIELDS SEARCHED (Int. Cl.4) |
| X | US-A-3 365 998 (ZAHODIAKIN)<br>* Column 2, lines 41/42 * | 1,5 | |
| A | | 4 | |
| | --- | | |
| X | US-A-3 657 955 (McKAY)<br>* Figure 1 * | 1,2,5 | |
| A | | 4 | |
| | --- | | |
| X | US-A-3 948 142 (McKAY et al.)<br>* Column 6, lines 18/19 * | 1,5 | |
| | -/- | | |

The present search report has been drawn up for all claims

| Place of search | Date of completion of the search | Examiner |
|---|---|---|
| BERLIN | 14-06-1985 | ZAPP E |

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | --- | 4 | |
| | ----- | | |

TECHNICAL FIELDS
SEARCHED (Int. Cl.4)

The present search report has been drawn up for all claims

| Place of search | Date of completion of the search | Examiner |
|---|---|---|
| BERLIN | 14-06-1985 | ZAPP E |